# EUROPÄISCHE PATENTSCHRIFT

(11) **EP 0 429 020 B1**
(45) Veröffentlichungstag und Bekanntmachung des Hinweises auf die Patenterteilung: **16.10.1996**
(21) Anmeldenummer: 90121963.4
(22) Anmeldetag: 16.11.1990
(51) Int. Cl.: B32B 5/18

(54) **Druck- und vakuumverformbare Schaumfolie zur Verkleidung von Fahrzeuginnenräumen**
Pressure- and vacuum-deformable foam sheet for interior lining of vehicles
Feuille en mousse déformable par compression et par le vide pour garniture intérieure de véhicules

(30) Priorität: 21.11.1989 DE 3938629
(43) Veröffentlichungstag der Anmeldung: 29.05.1991
(73) Patentinhaber: Benecke-Kaliko Aktiengesellschaft, D-30419 Hannover (DE)
(72) Erfinder: Wagner, Werner, Dr. rer. nat., W-3052 Bad Nenndorf (DE); Kracke, Heinrich, Dr. rer. nat., W-3160 Lehrte (DE); Hildebrandt, Gustav, W-3262 Auetal 1 (DE); Taczkowski, Reiner, Dipl.-Ing., W-3000 Hannover 1 (DE); Bruder, Axel, Dr. rer. nat., W-3006 Burgwedel (DE)
(74) Vertreter: Hagemann, Heinrich, Dr.rer.nat., Dipl.-Chem.

(56) Entgegenhaltungen:
- EP-A- 0 046 839
- EP-A- 0 203 399
- DE-A- 2 721 532
- FR-A- 2 462 268

## Beschreibung

Die Erfindung betrifft eine druck- und vakuumverformbare, genarbte Schaumfolie für Verkleidungen von Fahrzeuginnenräumen aus einer Schaumschicht aus einem geschäumten Polyolefin, mit einer darauf aufgebrachten Dekorschicht und gegebenenfalls einer Primerschicht sowie weiteren Schichten.

Schaumfolien der obigen Art sind bekannt. Sie dienen der Bespannung von Fahrzeuginnenteilen, insbesondere Automobilinnenteilen, wie Seiten, Türen, Schaltkonsolen, Stirnpolstern, Säulen, Sitzrückenseiten, Himmelteilen, Armaturentafeln usw. Auf einer Schaumschicht weisen sie im allgemeinen eine kompakte Deckschicht bzw. Dekorschicht auf. Mit dieser Deckschicht erhalten sie eine ausreichende mechanische Festigkeit für Gebrauchsbeanspruchungen, wie Kratzen, Stoßen, Scheuern und dergleichen. Die Schaumschicht verleiht dem fertigkaschierten Teil einen gewissen Polstereffekt und einen angenehmen Oberflächengriff. Dieses Material kann im allgemeinen mit einer für die verschiedenen Verarbeitungsmethoden angemessenen Stabilität gegen Druck und Wärme eingestellt werden. Die Verarbeitung der bekannten Schaumfolien kann auf Vakuumtiefziehanlagen und Stempelpressen vorgenommen werden. Auf beiden Anlagen erfolgt in der Regel die Verklebung mit Hilfe von mit Wärme aktivierbaren Klebern auf Formträgern durch Druck und Wärme. Modifizierungen dieses Verfahrens sowie auch der qualitativen Angaben sind möglich.

Die EP-A-0 203 399 offenbart eine witterungsbeständige weichmacherfreie Folie, insbesondere für die Innenausstattung und Außenausstattung von Kraftfahrzeugen, enthaltend 65-25 Gew.-% eines teilkristallinen Ethylen-Propylen-Dien-Terpolymers und 35-75 Gew.-% Homo- und/oder Copolymer von Propylen, 0-10 Gew.-% Füllstoffe, sowie Stabilisatoren und Gleitmittel. Eine vorteilhafte Weiterbildung besteht in einer Verbundfolie aus EPDM/PP-Folie mit einer vernetzten Polyolefinschaumstoffschicht.

Die EP-A-0 046 839 beschreibt eine Innenraumverkleidung für ein Kraftfahrzeug, bestehen aus einer Schaumstoffschicht aus einem geschlossenzellig geschäumten, vernetzten Polypropylen und einer darauf aufkaschierten, tiefziehfähigen Folie, einem Vlies oder Gewebe, wobei das Raumgewicht der Schaumstoffschicht 30-200 kg/m³ beträgt.

Aus der FR-A-2 462 268 geht ein mehrlagiges Material hervor, das eine Polyester/Polyurethan-Schaumschicht, eine Polyethylenschaumschicht und eine Polyurethandeckschicht umfaßt.

Aus der DE-A-2 721 532 geht ein Schaumstoff-Verbundmaterial hervor, das aus einer 1-120 mm dicken Schaumstoff-Bahn aus einem Ethylenpolymerisat mit einer Dichte zwischen 10 und 200 g/1 und einer 20 mm bis 5 mm dicken Beschichtung aus einem ungeschäumten thermoplastischen Kunststoff besteht, wobei die Kunststoff-Schicht kontinuierlich in Form eines Schmelzbandes auf die Schaumstoff-Bahn aufgebracht und die Schichten unter Anwendung eines Preßdrucks miteinander verbunden werden.

Der Erfindung liegt die Aufgabe zugrunde, die bekannten druck- und vakuumverformbaren Schaumfolien so weiterzubilden, daß sie bei möglichst niedrigem Dichtewert weiterhin die erforderliche Stabilität gegen Druck und Wärme, den wünschenswerten Polstereffekt sowie den angenehm weichen Oberflächengriff aufweist.

Erfindungsgemäß wird diese Aufgabe dadurch gelöst, daß die Schaumschicht aus dem geschäumten Polyolefin,
a) eine Dichte von 25 bis 200 kg/m³,
b) eine Bruchdehnung nach DIN 53 571 von mindestens 50%,
c) eine Stauchhärte nach DIN 53 577 von mindestens 50 kPa (bei 50% Verformung) und
d) eine Stärke von 0,5 bis 30 mm aufweist und die Dekorschicht zweischichtig ist und aus einer äußeren Polyurethan-Deckschicht und einer inneren Polyurethan-Schaumschicht besteht, wobei das Dickenverhältnis von Polyurethan-Deckschicht zu Polyurethan-Schaumschicht 1:1 bis 1:5 und die Gesamtstärke der Dekorschicht 0,15 bis 2,5 mm beträgt.

Es wird bevorzug, als Polyolefine Polyethylen (PE), Polypropylen (PP), Ethylen-Propylen-Mischpolymerisate (EPM) sowie Ethylen-Propylen-Dien-Mischpolymerisate (Terpolymere) (EPTM) heranzuziehen. Diese Materialien zeichnen sich dadurch aus, daß sie nicht nur die oben angesprochenen physikalischen Vorraussetzungen der erfindungsgemäßen vakuum- und druckverformbaren Schaumfolie erfüllen, sondern darüber hinaus thermisch gut verformbar sind, eine ausgezeichnete Temperaturbeständigkeit sowie ein hervorragendes Rückstellvermögen, das unter anderem zu dem erwünschten "progressiven Eindruckwiderstand" führt, eine feine, regelmäßige und geschlossenzellige Struktur sowie weitere gute mechanische Eigenschaften aufweisen, die u.a. auf die oben angesprochenen physikalischen Merkmale zurückgehen. Schaumstoffhersteller können anhand des oben angesprochenen Anforderungsprofils die Schaumstoffschichten herstellen, insbesondere auf der Basis von Polyolefinen, die für die Zwecke der Erfindung geeignet sind.

Die Stärke der Schaumschicht in der erfindungsgemäßen vakuum- und druckverformbaren Schaumfolie liegt zwischen 0,5 bis 30,0 mm, vorzugsweise zwischen 1,0 bis 10,0 mm, insbesondere zwischen 1,5 bis 4,0 mm. Die Dichte liegt zwischen 25 bis 200 kg/m³, wobei der Bereich von 30 bis 70 kg/m³ bevorzugt ist und der Bereich von 40 bis 50 kg/m³ zu besonders günstigen Ergebnissen führt. Erfindungsgemäß wird demzufolge durch den niedrigen Dichterahmen eine vorteilhafte Gewichtsreduzierung erzielt. Die Bruchdehnung nach DIN 53571 beträgt mindestens 50%, vorzugsweise 100 bis 650%, insbesondere 250 bis 450% und die Stauchhärte nach DIN 53577 mindestens 50 kPa, vorzugsweise 75 bis 200 kPa und insbesondere 100 bis 180 kPa bei 50%iger Verformung. Die Zugfestigkeit nach DIN 53571 beträgt vorzugsweise mindestens 200 kPa, vorzugsweise 300 bis 1700 kPa und insbesondere 500 bis 1100 kPa.

Die oben beschriebenen Anforderungen an die in der erfindungsgemäßen Schaumfolie enthaltene Schaumschicht werden insbesondere durch verschiedene Polyethylen- und -Propylenhandelsprodukte erfüllt, bei denen die Dichte zwischen 33 und 67 kg/m³, die Zugfestigkeit vorzugsweise zwischen 550 und 1060 kPa, die Bruchdehnung zwischen 280 und 350% und die Stauchhärte zwischen 120 und 150 kPa liegt. Ein derartiges Material zeichnet sich noch durch weitere folgende Vorteile aus: hervorragende physikalische Eigenschaften im statischen und dynamischen Bereich, flammhemmend ausrüstbar (DIN 4102: B2 oder B1), Weichheit einstellbar, sehr feine, regelmäßige und geschlossenzellige Struktur, dekorative, glatte Oberfläche, hohe Elastizität, ausgezeichnete thermische Verformbarkeit, hervorragende Schockabsorption, variable Temperaturbeständigkeit, ausgezeichnete thermische Isolationswerte, sehr gute Trittschalldämm-Isolationseigenschaften, minimale Wasseraufnahme, geringe Wasserdampfdurchlässigkeit, gute Witterungsbeständigkeit, ausgezeichnete Chemikalienbeständigkeit, inertes chemisches Verhalten, physiologische Unbedenklichkeit und Umweltfreundlichkeit.

Auf der Schaumschicht wird eine Dekorschicht ausgebildet. Diese ist zweischichtig und besteht aus einer äußeren Polyurethan-Deckschicht sowie einer inneren Polyurethan-Schaumschicht. Die äußere Polyurethan- Deckschicht hat dabei vorzugsweise eine Stärke von 0,1 bis 0,3 mm, während die Stärke der inneren Polyurethan-Schaumschicht vorteilhafterweise 0,2 bis 0,6 mm beträgt. Das Dickenverhältnis von äußerer Polyurethan-Deckschicht zu innerer Polyurethan-Schaumschicht beträgt 1:1 bis 1:5, insbesondere 1:2 bis 1:3. Die Gesamtstärke der Dekorschicht liegt in dem Bereich von 0,15 bis 2,5 mm, vorzugsweise zwischen 0,4 bis 1,2 mm, wobei der Bereich von 0,5 bis 0,7 mm regelmäßig besonders bevorzugt ist. Über 2,5 mm würden jedoch verschiedene Vorzüge des Artikels eingeschränkt, z.B. das Gewicht, der angenehme Griff und der Polstereffekt.

Zur Ausbildung der Polyurethan-Deckschicht wird vorzugsweise ein aliphatisches Polyurethan herangezogen, das sich durch gute Licht- und Wärmebeständigkeit sowie durch günstige mechanische Eigenschaften auszeichnet. Die Polyurethan-Schaumschicht wird vorteilhafterweise auf der Basis eines aromatischen und/oder aliphatischen Polyurethans ausgebildet, das mit einem Treibmittel chemisch geschäumt wurde. Es zeichnet sich durch einen sehr gleichmäßigen und feinporigen Schaum und gute Wärmebeständigkeit aus. Von ähnlichem Vorteil ist eine Dekorschicht aus einer thermoplastischen Folie, sei es ein- oder mehrschichtig, auf der Basis von Polyolefinen und/oder Polyolefin-Mischpolymerisaten, z.B. EPM, EPDM und EVA usw. Es hat sich gezeigt, daß auch eine thermoplastische Folie, ein- oder mehrschichtig, auf der Basis von Acrylnitril-Butadienstyrol-Copolymeren (ABS) und/oder Polyvinylchlorid (PVC) oder ABS/PVC und/oder PVC/Acrylat-Mischrezepturen vorteilhaft ist. Hierbei können handelsübliche ABS/PVC-Folien bzw. PVC-Folien herangezogen werden. Bei der Verwendung einer PVC-Folie ist jedoch im Hinblick auf den jeweiligen Anwendungsfall der Gesichtspunkt des Entsorgungsproblems, das eingangs angesprochen wurde, zu bedenken.

Die Dekorschicht kann nach üblichen Technologien mit beliebigen Narben versehen werden. Ein besonderes Produkt ergibt sich, wenn eine LE-Narbe (Leder Echt) erzeugt wird. Bei Verwendung von Polyurethan als Dekorschicht ist auch eine vinylartige Oberfläche herstellbar, wobei deren Ausbildung auf die Angaben der DE-PS 30 04 327 zurückgegriffen werden kann. Auch kann zur Ausbildung der Dekorschicht nach einem Verfahren vorgegangen werden, das in der DE-PS 34 05 985 beschrieben wird.

Die Dekorschicht sowie die Schaumschicht der erfindungsgemäßen vakuum- und druckverformbaren Schaumfolie lassen sich durch verschiedene bekannte Technologien miteinander verbinden. Das Verbinden kann durch einen normalen Kleber erfolgen, aber auch durch eine klebende Folie, wie insbesondere eine SchmelzWebefolie. Eine Klebeschicht, die die Dekorschicht mit der Schaumschicht, insbesondere der Polyurethanschaumschicht, flächig dauerhaft verbindet und so viel thermoplastischen Charakter bzw. geringe Stärke hat, daß keine negativen Auswirkungen auf die Verarbeitbarkeit des Fertigmaterials auftreten, wird besonders bevorzugt. Hierbei kann es sich um eine ein- bzw. mehrschichtige Schmelzkleberfolie handeln. Diese sollte vorzugsweise nicht stärker als etwa 0,2 mm sein. Von Vorteil ist auch eine ein- bzw. mehrschichtige Haftkleberschicht (Lösemittel bzw. Dispersionsklebstoffe) und/oder Kombination aus beidem, wobei vorzugsweise Polyurethan-Klebstoffe herangezogen werden.

In der Mehrzahl der Anwendungsfälle ist es bei der erfindungsgemäßen Schaumfolie zweckmäßig, eine Primerschicht auf der Rückseite auszubilden. Deren Ausbildung bzw. deren chemische Merkmale hängen von dem jeweiligen Substrat ab, auf das die Schaumfolie aufgetragen werden soll. Da die jeweils gewählte Schaumschicht, insbesondere auch die Polyurethan-Schaumschicht, erfahrungsgemäß dehäsive Eigenschaften hat, ist es also für die Weiterverarbeitung (Verbund mit Trägermaterialien) zweckmäßig, die Rückseite dauerhaft "klebefreundlich" mit einer Primerschicht auszurüsten. Hierzu werden auf die Rückseite eine oder mehrere dünne Schichten aufgebracht, die einerseits Haftung zur Schaumschicht und andererseits Haftung zum Substrat bzw. Trägerteil gewährleisten. Die Primerschicht muß daher mit den bei der Weiterverarbeitung verwendeten Klebstoffen kompatibel sein.

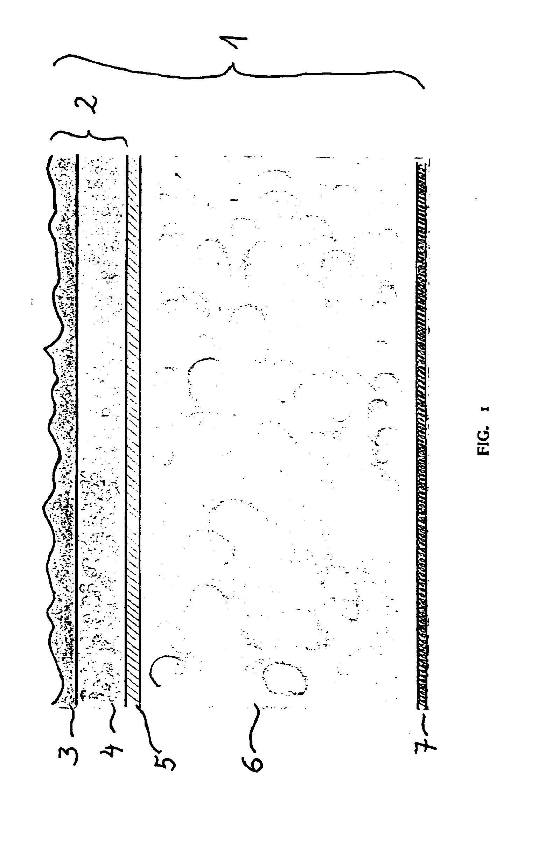

Eine für die Mehrzahl der technischen Anwendungszwecke besonders geeignete erfindungsgemäße Schaumfolie besteht insbesondere aus folgenden Schichten: Polyurethan-Dekorschicht, die sich unterteilt in eine etwa 0,2 mm starke Polyurethan-Deckschicht und eine etwa 0,45 mm starke Polyurethan-Schaumschicht, die mit einer etwa 2,45 mm starken Polypropylen-Schaumschicht über eine Kleberschicht einer Stärke von weniger als etwa 0,15 mm verbunden ist. Eine übliche Primerschicht folgt in einer Stärke von möglichst weniger als 0,05 mm, so daß die gesamte Schaumfolie eine Stärke von etwa 3,3 mm aufweist. Die beiliegende Fig. 1 gibt diesen Aufbau einer besonders vorteilhaften erfindungsgemäßen vakuum- und druckverformbaren Schaumfolie wieder. Danach setzt sich die Dekorschicht aus der Polyurethan-Deckschicht 3 und der Polyurethan-Schaumschicht 4 zusammen. Es folgt die Klebeschicht 5, die die Polypropylen-Schaumschicht 6 mit der Dekorschicht 2 verbindet. Im Anschluß an die Schaumschicht 4 folgt die Primerschicht 7.

Die erfindungsgemäße Schaumfolie zeichnet sich durch eine Vielzahl günstiger Eigenschaften aus: sie weist ein sehr niedriges Gewicht, insbesondere gegenüber den üblichen PVC-Folien, sowie eine hohe Narbstandfestigkeit, insbesondere bei der Verwendung von Polyurethan-Deck- und -Schaumschichten in Kombination mit der Leder Echt-Optik, einen guten Polstereffekt sowie ein gutes Rückstellvermögen, d.h. insbesondere einen günstigen "progressiven Eindruckwiderstand", gutes Foggingverhalten, gute Lichtechtheit sowie gute Wärmestabilität auf. Sie läßt sich PVC-frei herstellen. Die Weiterverarbeitung kann nach üblichen Verfahren erfolgen, so z.B. nach dem Tiefziehverfahren und der Preßverformung. Sie erfüllt die Lieferbedingungen diverser Automobilhersteller in hohem Maße.

### Beisciei:

Es wird folgender Aufbau angestrebt:
Dekorschicht (Polyurethan-Deckschicht auf der Basis eines aliphatischen Polyurethans) Stärke etwa 0,2 mm
Polyurethan-Schaumschicht (aromatisches Polyurethan, thermisch mit einem Treibmittel geschäumt) Stärke etwa 0,45 mm
Nachfolgende Klebeschicht (XIRO^{R-}Schmelzklebe- folie, mehrschichtig aufgebaut), eine Seite modifiziertes Polypropylen (zur Schaumseite) und andere Seite modifiziertes Polyamid (zur Dekorseite) etwa 0,08 bis 0,15mm
Schaumschicht (Alveolit TP 2503, Polypropylen-Schaum, Ausgangs-Dichte 40 kg/m³ und Stärke 3 mm) etwa 2,5 mm Stärke
Primerschicht (modifiziertes Polypropylen als Haftvermittler in Kombination mit einem 2-Komponenten-Polyurethan-Kleber)
etwa 0,05 mm oder weniger.

Die obige Folie läßt sich wie folgt herstellen:
Ein Polyurethan-Trennpapier oder eine geeignete Silikon-Matrize werden mittels einer Rakel mit der Polyurethan-High-Solid-Deckschichtmasse (Rezeptur: 1000 g aliphatisches Polyurethan (Prepolymer mit geblockten NCO-Gruppen), 85 g Vernetzer (Diamin), 40 g Pigmente, 25 g Verlaufshilfsmittel (Polyethersiloxan / Polyether-Gemisch) und 100 g Füllstoff) beschichtet. Der Auftrag erfolgt feucht in einer Menge von 250 g/m². Diese Masse wird in einem Durchlaufofen (Kanal) ansteigend auf etwa 165°C erwärmt und vernetzt. Der Trockenauftrag beträgt 200 g/m², die Stärke der ausgebildeten Deckschicht beträgt etwa 0,2 mm. Auf diese Deckschicht wird mit einer weiteren Rakel die Polyurethan-High-Solid-Schaummasse (Rezeptur: 1000 g aliphatisches Polyurethan (Prepolymer mit geblockten NCO-Gruppen), 90 g Vernetzer (Diamin), 10 g Pigmente, 25 g Verlaufshilfsmittel (Polyethersiloxan / Polyether-Gemisch), 30 g Treibmittel (Sulfohydrazid), 100 g Weichmacher (Sulfonamidderivat) und 200 g Füllstoff) aufgetragen und in einem zweiten Kanal bei Temperaturen bis etwa 175°C aufgeschäumt und vernetzt. Der feuchte Auftrag erfolgt in einer Menge von 250 g/m² und führt zu einem Trockenauftrag von 200 g/m². Die Stärke der ausgebildeten Schicht beträgt nach dem Aufschäumen etwa 0,45 mm. Durch ein am Kanalauslauf befindliches Kaschierwerk wird der Polyolefinschaum (geschäumtes Polypropylen) mit einer Schmelzkleberfolie (sh. vorstehende Kiebeschicht X1R05 und Aufheizen mittels eines Heizstrahlers auf etwa 150°C auf die Polyurethan-Dekorschicht kaschiert. Nach dem Durchlaufen einer Kühltrommel kann die Ware von der Matrize abgetrennt werden. Die Rückseite der ausgebildeten Verbundfolie wird in einem zweiten Arbeitsgang in einer Druckmaschine (mindestens zwei Druckstationen) und Trockenofen bis zu etwa 100°C mit der Primerschicht versehen. Dabei wird wie folgt vorgegangen: eine etwa 8%ige Lösung eines modifzierten Polypropylens wird an der ersten Druckstation mittels einer Rasterwalze (Auftrag etwa 12 g/m² feucht) auf den Schaum aufgetragen. An einer zweiten Druckstation wird auf diese bei Raumtemperatur abgelüftete Haftvermittlerschicht eine etwa 20%ige Lösung eines 2-Komponenten-Polyurethan-Klebers aufgedruckt (Auftrag etwa ebenfalls 12 g/m² feucht). Beide Schichten werden anschließend zusammen in einem Durchlaufofen abgelüftet und vernetzt.

## Patentansprüche

1. Druck- und vakuumverformbare, genarbte Schaumfolie für Verkleidungen von Fahrzeuginnenräumen aus einer Schaumschicht aus einem geschäumten Polyolefin, mit einer darauf aufgebrachten Dekorschicht und gegebenenfalls einer Primerschicht sowie weiteren Schichten, dadurch gekennzeichnet, daß die Schaumschicht aus dem geschäumten Polyolefin
a) eine Dichte von 25 bis 200 kg/m³,
b) eine Bruchdehnung nach DIN 53 571 von mindestens 50%,
c) eine Stauchhärte nach DIN 53 577 von mindestens 50 kPa (bei 50% Verformung) und
d) eine Stärke von 0,5 bis 30 mm aufweist
und die Dekorschicht zweischichtig ist und aus einer äußeren Polyurethan-Deckschicht und einer inneren Polyurethan-Schaumschicht besteht, wobei das Dickenverhältnis von Polyurethan-Deckschicht zu Polyurethan-Schaumschicht 1:1 bis 1:5 und die Gesamtstärke der Dekorschicht 0,15 bis 2,5 mm beträgt.>

2. Schaumfolie nach Anspruch 1, dadurch gekennzeichnet, daß die Dichte 30 bis 70 kg/m³, insbesondere 40 bis 50 kg/m³ beträgt.

3. Schaumfolie nach Anspruch 1 oder 2, dadurch gekennzeichnet, daß die Bruchdehnung 100 bis 650% beträgt.

4. Schaumfolie nach mindestens einem der Ansprüche 1 bis 3, dadurch gekennzeichnet, daß die Stauchhärte 70 bis 200 kPa beträgt.

5. Schaumfolie nach mindestens einem der Ansprüche 1 bis 4, dadurch gekennzeichnet, daß das Polyolefin Polyethylen, Polypropylen, ein Ethylen-Propylen-Mischpolymerisat oder ein Ethylen-Propylen-Dien-Mischpolymerisat ist.

6. Schaumfolie nach mindestens einem der Ansprüche 1 bis 5, dadurch gekennzeichnet, daß die Schaumschicht aus dem geschäumten Polyolefin 1,0 bis 10,0 mm stark ist.

7. Schaumfolie nach mindestens einem der Ansprüche 1 bis 6, dadurch gekennzeichnet, daß die Dekorschicht mittels eines Klebers mit der Schaumschicht aus geschäumtem Polyolefin verbunden ist.

## Claims

1. A pressure-deformable and vacuum-deformable foam sheet for the interior lining of vehicles, with a foam layer of expanded polyolefin, a decorative layer thereon and if desired with a primer layer and further layers, characterised in that the foam layer of expanded polyolefin has
a) a density of 25 to 20₀ kg/m³,
b) an elongation at break according to DIN 53 571 of at least 50%,
c) a compressive strength according to DIN 53 577 of at least 50 kPa (at 50% deformation), and
d) a thickness of 0.5 to 30 mm,
and the decorative layer is two-layered and comprised of an outer polyurethane cover layer and an inner polyurethane foam layer, with the thickness ratio of the polyurethane cover layer to the polyurethane foam layer in the range 1:1 to 1:5 and the overall thickness of the decorative layer between 0.15 and 2.5 mm.

2. A foam sheet according to claim 1, characterised in that the density is in the range 30 to 70 kg/m³, especially 40 to 50 kg/m³.

3. A foam sheet according to either claim 1 or claim 2, characterised in that the elongation at break is in the range 100 to 650%.

4. A foam sheet according to at least one of claims 1 to 3, characterised in that the compressive strength is in the range 70 to 200 kPa.

5. A foam sheet according to at least one of claims 1 to 4, characterised in that the polyolefin is polyethylene, polypropylene, an ethylene-propylene copolymer or an ethylene-propylene-diene copolymer.

6. A foam sheet according to at least one of claims 1 to 5, characterised in that the foam layer of expanded polyolefin has a thickness of between 1.0 and 10.0 mm.

7. A foam sheet according to at least one of claims 1 to 6, characterised in that the decorative layer is joined to the foam layer of expanded polyolefin by an adhesive.

## Revendications

1. Feuille de mousse grainée déformable sous pression et sous vide pour habillages d'habitacles de véhicules comprenant une couche de mousse faite d'une polyoléfine alvéolée sur laquelle est déposée une couche décorative et le cas échéant une couche de fond ainsi que d'autres couches, caractérisée en ce que la couche de mousse en polyoléfine alvéolée présente
a) une masse volumique comprise entre 25 et 200 kg_{/m}3,
b) un allongement à la rupture suivant DIN 53 571 au moins égal à 50%,
c) une résistance à l'écrasement suivant DIN 53 577 au moins égale à 50 kPa (pour une déformation de 50%), et
d) une épaisseur comprise entre 0,5 et 30 mm,
et en ce que la couche décorative est une double couche et se compose d'une couche de revêtement extérieure en polyuréthanne et d'une couche intérieure en mousse de polyuréthanne, le rapport de l'épaisseur de la couche de revêtement extérieure en polyuréthanne sur l'épaisseur de la couche de mousse de polyuréthanne étant compris entre 1:1 et 1:5, et l'épaisseur totale de la couche décorative étant comprise entre 0,15 et 2,5 mm.

2. Feuille de mousse selon la revendication 1, caractérisée en ce que la masse volumique est comprise entre 30 et 70 kg/m³, plus particulièrement entre 40 et 50 kg_{/m}3_{.}

3. Feuille de mousse selon la revendication 1 ou 2, caractérisée en ce que l'allongement à la rupture est compris entre 100 et 650%.

4. Feuille de mousse selon l'une au moins des revendications 1 à 3, caractérisée en ce que la résistance à l'écrasement est comprise entre 70 et 200 kPa.

5. Feuille de mousse selon l'une au moins des revendications 1 à 4, caractérisée en ce que la polyoléfine est le polyéthylène, le polypropylène, un copolymère éthylène-propylène ou un copolymère éthylène-propylène-diène.

6. Feuille de mousse selon l'une au moins des revendications 1 à 5, caractérisée en ce que la couche de mousse de polyoléfine alvéolée a une épaisseur comprise entre 1,0 et 10,0 mm.

7. Feuille de mousse selon l'une au moins des revendications 1 à 6, caractérisée en ce que la couche décorative est liée au moyen d'un adhésif à la couche de mousse de polyoléfine alvéolée.
